(19) **Europäisches Patentamt**
**European Patent Office**
**Office européen des brevets**

(11) **EP 4 718 529 A1**

(12) **EUROPEAN PATENT APPLICATION**
published in accordance with Art. 153(4) EPC

(43) Date of publication:
01.04.2026 Bulletin 2026/14

(21) Application number: 24881773.6

(22) Date of filing: 25.10.2024

(51) International Patent Classification (IPC):
H01M 4/36 (2006.01)    H01M 4/525 (2010.01)
H01M 10/0525 (2010.01)

(52) Cooperative Patent Classification (CPC):
H01M 4/36; H01M 4/485; H01M 4/505;
H01M 4/525; H01M 4/62; H01M 10/0525;
Y02E 60/10

(86) International application number:
PCT/CN2024/127515

(87) International publication number:
WO 2025/087414 (01.05.2025 Gazette 2025/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.10.2023 CN 202311408941

(71) Applicant: Ningbo Ronbay New Energy
Technology Co., Ltd.
Yuyao Ningbo, Zhejiang 315402 (CN)

(72) Inventors:
• HUANG, Xiaoxiao
Ningbo, Zhejiang 315402 (CN)
• SHANGGUAN, Huihui
Ningbo, Zhejiang 315402 (CN)
• YU, Jian
Ningbo, Zhejiang 315402 (CN)
• YUAN, Xujun
Ningbo, Zhejiang 315402 (CN)

(74) Representative: Bandpay & Greuter
11, rue Christophe Colomb
75008 Paris (FR)

(54) **SINGLE-CRYSTAL POSITIVE ELECTRODE MATERIAL AND PREPARATION METHOD THEREFOR, AND LITHIUM ION BATTERY**

(57) Provided are a monocrystalline positive electrode material, a preparation method thereof and a lithium-ion battery. The monocrystalline positive electrode material is a particulate matter, including an inner layer material and a coating layer coated on the surface of the inner layer material; where the particulate matter includes first particles having an average particle diameter $F_1$ of 1.0-2.0 $\mu$m and second particles having an average particle diameter $F_2$ of 2.5-6.0 $\mu$m, and the average thickness $T_1$ of the coating layer of the first particles is less than the average thickness $T_2$ of the coating layer of the second particles; the coating layer includes a fast ion conductor, and the molecular expression of the inner layer material is: $Li_{1+a}[Ni_xCo_yM_zQ_b]O_{2\pm c}A_d$, where $0 \leq a < 0.20$, $0.60 \leq x < 1.0$, $0 < y < 0.30$, $0 < z < 0.30$, $0 \leq b < 0.20$, $c \leq 0.02$, $0 \leq d \leq 0.05$, and $x+y+z+b=1$; M is Mn and/or Al; Q is selected from at least one of Zr, Mg, Ti, Te, Ca, Sr, Sb, Nb, Pb, V, Ge, Se, W, Mo, Zn, Ce, and Y; and A is selected from at least one of F, Cl, and S.

FIG. 1

EP 4 718 529 A1

## EP 4 718 529 A1

### Description

The present application claims priority to Chinese Patent Application No. 202311408941.4, entitled with "MONOCRYSTALLINE POSITIVE ELECTRODE MATERIAL AND PREPARATION METHOD THEREOF AND LITHIUM-ION BATTERY", and filed with the China National Intellectual Property Administration on October 26, 2023, which is hereby incorporated by reference in its entirety.

### TECHNICAL FIELD

This application relates to the field of a positive electrode material of secondary battery, particularly to a monocrystalline positive electrode material and preparation method thereof and lithium-ion battery.

### BACKGROUND

With the development of the new energy industry, lithium-ion batteries have also been developed quickly, and their industrial applications are becoming increasingly widespread. Lithium-ion batteries are a type of battery composed of a positive electrode, a negative electrode, and a non-aqueous electrolyte solution. The property of the positive electrode material provided on the positive electrode side has a critical impact on the performance of lithium-ion batteries, such as rate, energy density, and service life.

The positive electrode material for lithium-ion batteries includes monocrystalline positive electrode material and polycrystalline positive electrode material. Due to the presence of a large number of fragile grain boundaries in the polycrystalline positive electrode material, the anisotropic expansion and contraction of the material during charging and discharging of the lithium-ion battery easily causes obvious cracking, differentiation and other phenomena in the polycrystalline positive electrode material, further leading to capacity degradation and safety hazards in the battery.

As a result, the ratio of using the monocrystalline positive electrode material is gradually increasing. Compared to the polycrystalline positive electrode material, the monocrystalline positive electrode material has the characteristic of relatively small size, but the compaction performance of small-sized positive electrode material is not as good as that of large-sized positive electrode material. When the size of monocrystalline positive electrode material is increased to improve its compaction performance, it leads to a decrease in electrochemical performance such as capacity. Thus, current monocrystalline positive electrode material faces the challenge of balancing compaction performance and capacity performance.

### SUMMARY

The present application provides a monocrystalline positive electrode material, a preparation method thereof and a lithium-ion battery, for providing a monocrystalline positive electrode material with excellent compaction performance and capacity density.

In the first aspect, the present application provides a monocrystalline positive electrode material, the monocrystalline positive electrode material is a particulate matter, and the particulate matter includes an inner layer material and a coating layer of the inner layer material, and the coating layer includes a fast ion conductor; where

the particulate matter includes first particles having an average particle diameter $F_1$ of 1.0-2.0 $\mu$m and second particles having an average particle diameter $F_2$ of 2.5-6.0 $\mu$m, and an average thickness $T_1$ of the coating layer of the first particles is less than an average thickness $T_2$ of the coating layer of the second particles;

the coating layer includes a fast ion conductor, and the inner layer material has a molecular expression of $Li_{1+a}[Ni_xCo_yM_zQ_b]O_{2\pm c}A_d$, where $0\leq a<0.20$, $0.60\leq x<1.0$, $0<y<0.30$, $0<z<0.30$, $0\leq b<0.20$, $c\leq0.02$, $0\leq d\leq0.05$, and $x+y+z+b=1$, M is Mn and/or Al, Q is selected from at least one of Zr, Mg, Ti, Te, Ca, Sr, Sb, Nb, Pb, V, Ge, Se, W, Mo, Zn, Ce, and Y, and A is selected from at least one of F, Cl, and S.

In one possible implementation, the fast ion conductor includes a metal lithium compound and/or a non-metal lithium compound.

In one possible implementation, the monocrystalline positive electrode material is obtained by co-sintering a mixture containing a first inner layer material and a second inner layer material; where a residual alkali content of a particle surface of the first inner layer material is lower than a residual alkali content of a particle surface of the second inner layer material.

In one possible implementation, $F_2-F_1\geq0.6$ $\mu$m.

In one possible implementation, the metal lithium compound includes at least one of lithium iron phosphate, lithium cobalt oxide, lithium nickel cobalt manganese oxide, lithium manganate, lithium nickelate, lithium titanate, lithium titanium aluminum phosphate, lithium lanthanum titanate, lithium lanthanum tantalate, lithium aluminum germanium phosphate, lithium lanthanum zirconium oxide, lanthanum zirconium aluminum lithium oxide, niobium-doped lithium lanthanum zirconium oxide, and tantalum-doped lithium lanthanum zirconium oxide; the non-metal lithium compound includes at least one of a boron-lithium compound, a sulfur-lithium compound, and a phosphorus-lithium compound.

In one possible implementation, the coating layer has a thickness of 5-100 nm.

In one possible implementation, $T_1 \geq 5$ nm and $T_2 - T_1 \geq 10$ nm.

In one possible implementation, $T_1 < 20$ nm and 10 nm $\leq T_2 < 100$ nm.

In one possible implementation, 8 nm $\leq T_1 < 15$ nm.

In one possible implementation, 20 nm $\leq T_2 < 50$ nm.

In one possible implementation, $0.5 \leq m\frac{T_1 \times B_1}{D_{25}^2} + (1-m)\frac{T_2 \times B_2}{D_{75}^2} \leq 6$; where m is a preset coefficient, $0.4 \leq m \leq 0.6$, and $B_1$ and $B_2$ are the specific surface areas of the first particles and the second particles, respectively.

In the second aspect, the present application provides a method for preparing the monocrystalline positive electrode material in the first aspect and any one of the possible embodiments, including:

performing coating-sintering on a mixture containing the first positive electrode material and the second positive electrode material to obtain the monocrystalline positive electrode material; where,

a mass ratio between the first positive electrode material and the second positive electrode material is 2:3 to 3:2; the average particle diameter of the first positive electrode material is 1.0-2.0 $\mu$m, and the average particle diameter of the second positive electrode material is 2.5-6.0 $\mu$m; the difference between a residual alkali content of a surface of the second positive electrode material and a residual alkali content of a surface of the first positive electrode material is greater than 500 ppm;

the molecular expression of the first positive electrode material and the second positive electrode material is $Li_{1+a}[Ni_xCo_yM_zQ_b]O_{2\pm c}A_d$, where $0 \leq a < 0.20$, $0.60 \leq x < 1.0$, $0 < y < 0.30$, $0 < z < 0.30$, $0 \leq b < 0.20$, $c \leq 0.02$, $0 \leq d \leq 0.05$, and $x+y+z+b=1$, where M is Mn and/or Al, Q is selected from at least one of Zr, Mg, Ti, Te, Ca, Sr, Sb, Nb, Pb, V, Ge, Se, W, Mo, Zn, Ce, and Y, and A is selected from at least one of F, Cl, and S.

In one possible implementation, the first positive electrode material and the second positive electrode material are obtained by the following steps:

sintering a first mixture containing a first precursor and a first lithium source under a first condition to obtain the first positive electrode material, and sintering a second mixture containing a second precursor and a second lithium source under a second condition to obtain the second positive electrode material;

where, the molecular expression of the first precursor and the second precursor is $[Ni_rCo_sM_tQ_u]TM$; where $0.60 \leq r < 1.0$, $0 < s < 0.30$, $0 < t < 0.30$, $0 \leq u < 0.20$, M is Mn and/or Al, Q is selected from: Zr, Mg, Ti, Te, Al, Ca, Sr, Sb, Nb, Pb, V, Ge, Se, W, Mo, Zn, Ce, and Y, and TM is selected from: $CO_3^{2-}$ and/or $OH^-$;

a first sintering temperature of the first condition and a second sintering temperature of the second condition are both selected from 750-980°C; a difference between a second lithium-content per mole of the second precursor in the second mixture and a first lithium-content per mole of the first precursor in the first mixture is 0.005-0.1.

In one possible implementation, the molecular expression of the first precursor is $[Ni_{r1}Co_{s1}M_{t1}'Q_{u1}]TM_1$, and the molecular expression of the second precursor is $[Ni_{r2}Co_{s2}M_{t2}Q''_{u2}]TM_2$; where, $0.60 \leq r1 < 10$, $0 < s1 < 0.30$, $0 < t1 < 0.30$, $0 \leq u1 < 0.20$, $0.60 \leq r2 < 10$, $0 < s2 < 0.30$, $0 < t2 < 0.30$, $0 \leq u2 < 0.20$; Q' and Q'' are each independently selected from at least one of Zr, Mg, Ti, Te, Al, Ca, Sr, Sb, Nb, Pb, V, Ge, Se, W, Mo, Zn, Ce, and Y; $TM_1$ and $TM_2$ are each independently selected from: $CO_3^{2-}$ and/or $OH^-$.

In one possible implementation, Q' and Q'' are the same, and u1 = u2.

In one possible implementation, the performing coating-sintering on a mixture containing the first positive electrode material and the second positive electrode material to obtain the monocrystalline positive electrode material includes:

sintering the mixture at a temperature of 480-520°C for 2-3 hours to obtain an intermediate mixture;

performing coating-sintering on a mixture of the intermediate mixture and a coating agent to obtain the monocrystalline positive electrode material.

In the third aspect, the embodiment of the present application provides a lithium-ion battery including:

the monocrystalline positive electrode material in the first aspect and any one of the possible implementations.

The embodiments of the present application provide one or more implementations that have at least the following technical effects.

First, the embodiments of the present application provide a monocrystalline positive electrode material with a particles diameter that is compatible with a thickness of the coating layer, using a monocrystalline positive electrode material containing first particles with an average particle diameter of 1.0-2.0 $\mu$m and second particles with an average particle diameter of 2.5-6.0 $\mu$m and corresponding coating layers with different average thickness. As a result, a monocrystalline positive electrode material with high compaction density and high capacity is provided.

Second, in the method for preparing the monocrystalline positive electrode material provided in the embodiments of the present application, a monocrystalline positive electrode material with the particle diameter that is compatible with the thicknesses of the coating layer is prepared in a single step by using the first positive electrode material and the second positive electrode material with different residual alkali contents, thereby achieving efficient preparation of a monocrystalline positive electrode material with high compaction density and high capacity.

Other features and advantages of the present application will be explained in the following description, and will become apparent in part from the specification or will be understood by practicing the present application. The objectives and other advantages of the present application may be achieved and obtained through the structures specifically indicated in the written specification, claims, and drawings. It should be understood that the general description above and the detailed description below are merely exemplary and explanatory and do not limit the present disclosure.

## BRIEF DESCRIPTION OF DRAWINGS

To more clearly illustrate the technical solutions in the embodiments of the present application or the prior art, the following is a brief introduction to the drawings used in the description of the embodiments or the prior art. Obviously, the drawings described below are merely some embodiments described in the present application and for those skilled in the art, other drawings can also be obtained based on these drawings without creative labor.

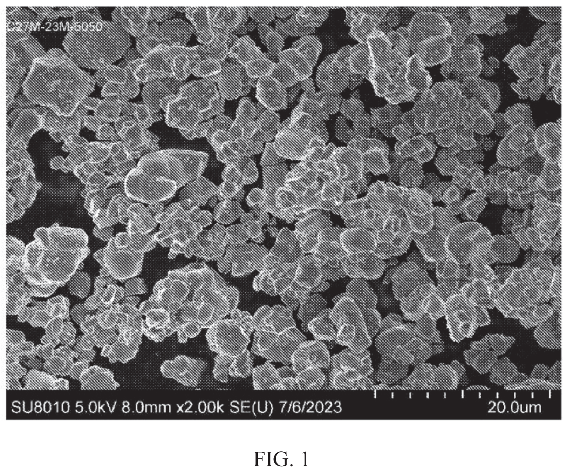

FIG. 1 is an SEM schematic view of a monocrystalline positive electrode material in Example 1 provided by an embodiment of the present application.

## DESCRIPTION OF EMBODIMENTS

The technical solutions of the present application will be described clearly and fully below with reference to the accompanying figures and specific embodiments. However, those skilled in the art will understand that the examples described below are only some of the examples of the present application and not all examples, and are provided for illustrative purposes only and should not be construed as limiting the scope of the present application. Based on the examples of the present application, all other examples obtained by those skilled in the art without making any creative labor are within the scope of protection of the present application. If specific conditions are not specified in the examples, conventional conditions or those recommended by the manufacturer shall be used. The reagents or instruments used without specifying the manufacturer are conventional products available for purchase on the market.

In the view of the current lack of monocrystalline positive electrode materials with both excellent compaction performance and capacity performance, the embodiments of the present application provide a monocrystalline positive electrode material including first particles with an average particle diameter of 1.0-2.0 $\mu$m and second particles with an average particle diameter of 2.5-6.0 $\mu$m, which exhibits superior compaction performance. Additionally, the monocrystalline positive electrode material has a coating layer thickness that is basically adapted to the particle diameter, the average coating layer thickness of large particles being greater than that of small particles. On the one hand, such differentiated coating significantly increases the capacity of the monocrystalline positive electrode material, on the other hand, it can prevent small particles from experiencing a significant decline in cycle performance due to large thickness of the coating layer.

The following provides a detailed description of a monocrystalline positive electrode material, and preparation method and lithium-ion battery thereof according to the embodiments of this application. It should be noted that the examples described below are merely some of the examples of this application and not all of them. Based on the examples of this application, all other examples obtained by ordinary technicians in the art without making creative effort belong to the scope of protection of this application.

This application first provides a monocrystalline positive electrode material that exhibits excellent compaction performance and capacity at the same time. Referring to FIG. 1, the monocrystalline positive electrode material is in the form of particulate matter.

The particulate matter includes an inner layer material and a coating layer covering on the surface of the inner layer material.

The coating layer includes a fast ion conductor. The coating layer may further include oxide of metal element in the fast ion conductor other than lithium. For example, if the fast ion conductor is lithium cobalt oxide, the coating layer may further include cobalt hydroxide. The fast ion conductor may include a metal lithium compound and/or a non-metal lithium compound.

The molecular expression of the inner layer material is: $Li_{1+a}[Ni_xCo_yM_zQ_b]O_{2\pm c}A_d$, where $0\leq a<0.20$, $0.60\leq x<1.0$, $0<y<0.30$, $0<z<0.30$, $0\leq b<0.20$, $c\leq 0.02$, $0\leq d\leq 0.05$, and $x+y+z+b=1$; where M is Mn and/or Al, Q is selected from at least one of Zr, Mg, Ti, Te, Ca, Sr, Sb, Nb, Pb, V, Ge, Se, W, Mo, Zn, Ce, and Y, and A is selected from at least one of F, Cl, and S.

The particulate matter includes first particles having an average particle diameter of 1.0-2.0 $\mu$m and second particles having an average particle diameter of 2.5-6.0 $\mu$m, thereby ensuring the compaction density of the monocrystalline positive electrode particle provided by the embodiments of the present application (compaction density not less than 3.24 g/cm$^3$).

Furthermore, the aforementioned particulate matter is obtained by co-sintering a mixture containing a first inner layer material and a second inner layer material. The mixture further includes a coating agent. The molecular expression of the first inner layer material and the second inner layer material is $Li_{1+a}[Ni_xCo_yM_zQ_b]O_{2\pm c}A_d$, where $0\leq a<0.20$, $0.60\leq x<1.0$, $0<y<0.30$, $0<z<0.30$, $0\leq b<0.20$, $c\leq 0.02$, $0\leq d\leq 0.05$, and $x+y+z+b=1$; where M is Mn and/or Al, Q is selected from at least one of Zr, Mg, Ti, Te, Ca, Sr, Sb, Nb, Pb, V, Ge, Se, W, Mo, Zn, Ce, and Y, and A is selected from at least one of F, Cl, and S.

The purpose of co-sintering the mixture containing the first inner layer material and the second inner layer material is actually to achieve the coating of the first inner layer material and the second inner layer material. Since the thickness of the coating layer is on the nanometer scale and its effect on the particle diameter of the particulate matter is negligible, the average particle diameter of the particulate matter of the first inner layer material is consistent with that of the first particles and is 1.0-2.0 $\mu$m; the average particle diameter of the particulate matter of the second inner layer material is consistent with that of the second particles and is 2.5-6.0 $\mu$m.

The residual alkali content of the surface of the first inner layer material is lower than that the residual alkali content of the surface of the second inner layer material, enabling the formation of coating layers with different thicknesses during sintering of the mixture.

Further, the specific surface area and average particle diameter of the first particles and second particles each satisfy the following relationship formula:

$$0.5 \leq m\frac{T_1 \times B_1}{D_{25}^2} + (1-m)\frac{T_2 \times B_2}{D_{75}^2} \leq 6$$ ; where, m is a preset coefficient, $0.4\leq m\leq 0.6$, and $B_1$ and $B_2$ are the specific

surface area of the first particles and the specific surface area of the second particles, respectively.

In the above relationship formula, the preset coefficient is consistent with the mixing mass ratio of the inner layer materials (i.e., the first inner layer material and the second inner layer material) during the preparation process. For example, if the mixing ratio of the two positive electrode materials is 1:1, m is 0.5. For example, if the mixing ratio of the two positive electrode materials is 2:3, m=0.4.

Furthermore, the monocrystalline positive electrode material provided in the embodiments of the present application has the characteristic of the thickness of the coating layer being basically adapted to the particle diameter of particles. The average thickness $T_1$ of the coating layer of the first particles is less than the average thickness $T_2$ of the coating layer of the second particles, thereby avoiding the problem that cycle performance is significantly reduced as a result of the higher thickness of the coating layer of the particulate matter with a small particle diameter.

In the embodiments of the present application, the first particles and second particles are the particles obtained through sieving. The following provides a detailed description of the sieving for the first particles and second particles.

First, the target particle size of the first particles and second particles in the particulate matter is determined, and the particulate matter of the monocrystalline positive electrode material is tested by a particle size analyzer to obtain the value of the target particle size of the first particles and the value of the target particle size of the second particles in the monocrystalline positive electrode material.

The target particle size is determined by a median particle diameter $D_{50}$ of the particulate matter of the first inner layer material, a median particle diameter $D_{50}$ of the particulate matter of the second inner layer material, and the mixing ratio of the first inner layer material and the second inner layer material by mass (i.e., the aforementioned preset coefficient). In other words, the target particle size of the two sizes of inner layer particles in the monocrystalline positive electrode material obtained by mixing and co-sintering is determined by the mixing ratio of the two sizes of inner layer particles. For example, when the mass ratio of the first inner layer material to the second inner layer material is 1:1, i.e., m=0.5, the target particle size of the first particles is $D_{25}$ and the target particle size of the second particles is $D_{75}$. For example, when the mass ratio of the first inner layer material to the second inner layer material is 2:3, i.e., m=0.4, the target particle size of the first particles is $D_{20}$ and the target particle size of the second particles is $D_{80}$. Correspondingly, when the mass ratio of the first inner layer material to the second inner layer material is 3:2, i.e., m=0.6, the target particle size of the first particles is $D_{30}$ and the target particle size of the second particles is $D_{70}$.

After determining the target particle size of the first particles and the target particle size of the second particles according to the aforementioned method, the particle size analyzer can be used to test the target particle size of the aforementioned monocrystalline positive electrode material, and the values of target particle size obtained from the test are the target particle diameter of the first particles and the target particle diameter of the second particles, respectively.

A sieve is selected based on the target particle diameter and used for sieving the monocrystalline positive electrode material with a mass of 10g to obtain the first and second particles. A mass ratio of 1:1 between the first inner layer material to the second inner layer material is taken again as an example for illustration.

At least two mesh-sizes of sieves are determined based on the target particle diameter. First, a sieve with the smaller mesh-size is used to sieve the monocrystalline positive electrode material to obtain an undersize portion. Then, another sieve is used to sieve the undersize portion for collecting an oversize portion, obtaining the particulate matter containing the target particle diameter particles. For example, the particulate matter of the monocrystalline positive electrode material is firstly sieved by a 4500-mesh sieve (the particle diameter is approximately $2.8 \pm 0.5$ $\mu$m) to obtain an undersize portion. Then, the undersize portion is sieved by a 5500-mesh sieve (the particle diameter is approximately 2.3 $\pm 0.5$ $\mu$m) to obtain an oversize portion, that is, the first particles.

Similarly, the particulate matter of monocrystalline positive electrode material is first screened by an 1800-mesh sieve (the particle diameter is approximately $7.2 \pm 0.5$ $\mu$m) to obtain an undersize portion. Then, the undersize portion is sieved by a 2200-mesh sieve (the particle diameter is approximately $5.9 \pm 0.5$ $\mu$m) to obtain an oversize portion, that is, the second particles.

The sieving and sieve selection methods for the first and second particles corresponding to the mixing ratio of the remaining first inner layer material and the second inner layer material are consistent with the aforementioned example and are not repeated here.

After sieving to obtain first and second particles, samples can be taken for SEM imaging and measurement. The first and second particles are sampled at least three times respectively. During imaging for each sample, the electron microscope lens is moved to capture at least three observation areas at a magnification of x2000. In the SEM images captured, and the particle diameter of 100 particulate matters is measured randomly and the average value of the particle diameter is calculated.

The particle diameter of each particle is determined by measuring the length of a straight line between the two farthest points on the particulate matter in the captured image and the length of a perpendicular line passing through the midpoint of the straight line and calculating the average of these two lengths, that is, the particle diameter of the particulate matter. Here, the endpoints of the perpendicular line at its two ends represent the edges of the particulate matter, respectively.

Further, the following describes the measurement of the thickness of coating layer.

Samples are respectively taken from the first and second particles obtained from the aforementioned sieving to prepare TEM imaging samples. Then, at a magnification of x20000, the lens is moved to randomly capture and measure the thicknesses of coating layers of at least 50 particles. As a result, the thicknesses of coating layers of at least 30 particulate matters is obtained and the average value of them is the average thickness of coating layer of the aforementioned first or second particles. The thickness of coating layer of each particulate matter is determined by measuring at least three different positions on the same particulate matter and calculating the average value of the measurements. For example, the measurement tool may be Nano Measurer.

It should be noted that, due to the highly agglomerated property of the monocrystalline positive electrode material, compared to the particle size value directly measured by a particle size analyzer, the average particle diameter obtained by sieving the first and second particles and measuring them in the embodiments of the present application can more accurately reflect the size distribution of particulate matters of the monocrystalline positive electrode material.

Furthermore, since the particle size of the particulate matter exhibits a normal distribution or near-normal distribution, the first particles obtained by sieving based on respective target particle sizes of the first particles and the second particles contain a small quantity of sintered products corresponding to the second inner layer material; and the second particles also contain a small quantity of sintered products corresponding to the first inner layer material.

Nevertheless, the majority (at least 85% or higher) of particulate matter in the first particles is still the monocrystalline positive electrode material with a smaller-thickness coating layer obtained from the first inner layer material having a lower residual alkali content of surface; and similarly, the majority (at least 85% or higher) of particulate matter in the second particles is still the monocrystalline positive electrode materials with a larger-thickness coating layer obtained from the second inner layer material having a higher residual alkali content of surface, therefore, after sieving in this way, determining the average thicknesses of the coating layers of the first and second particles can still relatively accurately reflect the characteristic of the difference in the coating layer thickness between the positive electrode material corresponding to the first inner layer material and the positive electrode material corresponding to the second inner layer material in the monocrystalline positive electrode material, and can relatively accurately reflect the specific details of this difference.

In some embodiments, a>0, b>0, and c>0.

In some embodiments, $F_2 - F_1 \geq 0.6$ $\mu$m.

In some embodiments, $1.0$ $\mu$m$<F_2-F_1 <2.5$ $\mu$m.

The aforementioned metal lithium compound includes at least one of lithium iron phosphate, lithium cobalt oxide, lithium nickel cobalt manganese oxide, lithium manganate, lithium nickelate, lithium titanate, lithium titanium aluminum phosphate, lithium lanthanum titanate, lithium lanthanum tantalate, lithium aluminum germanium phosphate, lithium lanthanum zirconium oxide, lanthanum zirconium aluminum lithium oxide, niobium-doped lithium lanthanum zirconium oxide, and tantalum-doped lithium lanthanum zirconium oxide; the non-metal lithium compound includes at least one of boron-lithium compounds, sulfur-lithium compounds, and phosphorus-lithium compounds.

The material doped with some element in the aforementioned metal lithium compound and/or non-metal lithium compound indicates that the content of that element relative to other main elements in the material is trace. For example, niobium-doped lithium lanthanum zirconium oxide indicates that the content of lithium, lanthanum, and zirconium is relatively high while the content of niobium element is relatively low in the oxide.

In some embodiments, the metal lithium compound is consisted of at least one of lithium iron phosphate, lithium cobalt oxide, lithium nickel cobalt manganese oxide material, lithium manganate, lithium nickelate, lithium titanate, lithium titanium aluminum phosphate, lithium lanthanum titanate, lithium lanthanum tantalate, lithium aluminum germanium phosphate, lithium lanthanum zirconium oxide, lanthanum zirconium aluminum lithium oxide, niobium-doped lithium lanthanum zirconium oxide, and tantalum-doped lithium lanthanum zirconium oxide; and the non-metal lithium compound is consisted of at least one of boron-lithium compounds, sulfur-lithium compounds, and phosphorus-lithium compounds.

Further, in the monocrystalline positive electrode material, the thickness of the coating layer of the particulate matter is 5-100 nm.

In some embodiments, the average thickness $T_1$ of the coating layer of the first particles is $\geq$5 nm, and the difference $T_2-T_1$ between the average thickness $T_2$ of the coating layer of the second particles and the average thickness $T_1$ of the coating layer of the first particles is $\geq$10 nm.

In some embodiments, $T_1$<20 nm, and 10 nm$\leq T_2$<100 nm.

In some embodiments, 8 nm$\leq T_1$<15 nm.

In some embodiments, 20 nm$\leq T_2$<50 nm.

Further, the following describes the method for preparing the aforementioned monocrystalline positive electrode material. The method includes at least the following steps.

A mixture containing the first positive electrode material and the second positive electrode material is subjected to coating-sintering to obtain the aforementioned monocrystalline positive electrode material.

Where, in the aforementioned mixture, the mass ratio between the first positive electrode material and the second positive electrode material is 2:3 to 3:2. The average particle diameter of the first positive electrode material is 1.0-2.0 $\mu$m, and the average particle diameter of the second positive electrode material is 2.5-6.0 $\mu$m.

The aforementioned mixture may also include a coating agent to make the coating layer of the surface of particulate matter of the monocrystalline positive electrode material contain a fast ion conductor.

The average particle diameter of the first and second positive electrode materials can be obtained by the following two embodiments.

(1) Direct and separate test through the particle size analyzer.
(2) Through the previous method: sampling, capturing SEM images and measuring.

Similarly, in order to avoid inaccurate average particle diameter obtained by the particle size analyzer due to the easy agglomeration of the monocrystalline positive electrode material, the method for measuring the average particle diameter of the first positive electrode material and the second positive electrode material in the embodiments of the present application is preferably the method (2).

The difference between the residual alkali content of surface of the second positive electrode material and the residual alkali content of surface of the first positive electrode material is greater than 500 ppm.

The molecular expression of the first positive electrode material and the second positive electrode material is: $Li_{1+a}[Ni_xCo_yM_zQ_b]O_{2\pm c}A_d$, where $0\leq a<0.20$, $0.60\leq x<1.0$, $0<y<0.30$, $0<z<0.30$, $0\leq b<0.20$, $c\leq 0.02$, $0\leq d\leq 0.05$, and x+y+z+b=1; where M is Mn and/or Al, Q is selected from at least one of Zr, Mg, Ti, Te, Ca, Sr, Sb, Nb, Pb, V, Ge, Se, W, Mo, Zn, Ce, and Y, and A is selected from at least one of F, Cl, and S.

Specifically, the sintering temperature for the above-mentioned coating-sintering is selected from 750-980°C.

In the embodiments of the present application, the control of the coating layer thickness of the surface of positive electrode materials with two sizes is achieved by controlling the residual alkali content of the surface of the first positive electrode material (i.e., the aforementioned first inner layer material) to be different from the residual alkali content of the surface of the second positive electrode material (i.e., the aforementioned second inner layer material). The residual alkali of the surface of the first positive electrode material and the residual alkali of the surface of the second positive electrode material are mainly composed of $Li_2CO_3$ and LiOH.

The residual alkali content is the content of free lithium calculated by converting the measured content $h_1$ of $Li_2CO_3$ and content $h_2$ of LiOH. The conversion method is:

$$(h_1*2/73.88+h_2/23.94)*6.941.$$

On the surface of the first positive electrode material, the content of $Li_2CO_3$ is 500-3000 ppm, and the content of LiOH is 5000-10000 ppm. On the surface of the second positive electrode material, the content of $Li_2CO_3$ is 800-3500 ppm, and the content of LiOH is 8000-18000 ppm.

Further, the following provides an embodiment for preparing the first positive electrode material and the second positive electrode material.

A first mixture containing a first precursor and a first lithium source is sintered under a first condition to obtain the first positive electrode material. A second mixture containing a second precursor and a second lithium source is sintered under a second condition to obtain the second positive electrode material.

The molecular expression of the first precursor and the second precursor is $[Ni_rCo_sM_tQ_u]TM$, where, $0.60\leq r<10$, $0<s<0.30$, $0<t<0.30$, $0\leq u<0.20$, $0.60\leq r<10$, $0<s<0.30$, $0<t<0.30$, $0\leq u<0.20$, Q is selected from at least one of Zr, Mg, Ti, Te, Al, Ca, Sr, Sb, Nb, Pb, V, Ge, Se, W, Mo, Zn, Ce, and Y, and TM is selected from $CO_3^{2-}$ and/or $OH^-$.

The above first mixture may also include a first dopant. Similarly, the second mixture may also include a second dopant. The amounts of the first dopant and the second dopant may be the same or different.

The first dopant and the second dopant may correspond to the same or different doping elements. The specific addition amount and type (i.e., the addition amount and type of the doping element) are each provided correspondingly according to the doping element in the first precursor and the first positive electrode material and the doping element in the second precursor and the second positive electrode material.

To ensure that the difference between the residual alkali content of the surface of the second positive electrode material and the residual alkali content of the surface of the first positive electrode material is 500 ppm, on the one hand, both the first sintering temperature of the first condition and the second sintering temperature of the second condition are selected from 750-980°C; and the first sintering temperature is less than or equal to the second sintering temperature, and the difference between the second sintering temperature and the first sintering temperature is greater than or equal to 20°C. On the other hand, the lithium-content in the first mixture is lower than that in the second mixture. As the sintering temperature is higher, the residual alkali content is lower. Therefore, for the embodiment where the first sintering temperature is lower than the second sintering temperature, the lithium-content in the preparation of the second positive electrode material should be higher, so that the difference between the residual alkali content of the surface of the second positive electrode material and the residual alkali content of the surface of the first positive electrode material is greater than 500 ppm. The difference between a second lithium-content per mole of the second precursor in the second mixture and a first lithium-content per mole of a first precursor in the first mixture is 0.005-0.1.

The molecular expressions of the first precursor and the second precursor above may be the same or different. In order to make an average particle diameter of the first positive electrode material being 1.0-2.0 $\mu$m and an average particle diameter of the second positive electrode material being 2.5-6.0 $\mu$m, corresponding regulation methods include but are not limited to the following embodiments.

(1) Respective sintering temperatures are controlled by an identical precursor.

The greater the temperature difference between the first sintering temperature and the second sintering temperature, the greater the difference between the average particle diameter of the first positive electrode material and the average particle diameter of the second positive electrode material.

In some embodiments, the first precursor and the second precursor, of which average particle diameters are identical and not less than 1.0 $\mu$m, are sintered separately. The content of nickel in the first precursor and the second precursor is equal, i.e., r1 = r2, and at this point, the first sintering temperature is lower than the second sintering temperature.

For example, to make the difference between the average particle diameter of the first positive electrode material and the average particle diameter of the second positive electrode material be 0.5-4.5 $\mu$m, the regulation is performed based on the fact that each increase of 4°C in temperature difference corresponds to an increase of 0.1 $\mu$m in the difference between the average particle diameter of the second positive electrode material and the average particle diameter of the first positive electrode material; or

when the difference between the average particle diameter of the first positive electrode material and the average particle diameter of the second positive electrode material is greater than 4.5 $\mu$m, the regulation is performed based on the fact that each increase of 2°C in temperature difference corresponds to an increase of 0.1 $\mu$m in the difference between the average particle diameter of the second positive electrode material and the average particle diameter of the first positive electrode material. It should be understood that, when the temperature difference and the first sintering temperature and second sintering temperature are calculated based on this, an adaptive adjustment should also be made to the calculated first sintering temperature and second sintering temperature according to parameters such as the lithium content.

As a result, the difference between the second sintering temperature and the first sintering temperature is greater than or equal to 20°C. For example, if the average particle diameters of the first precursor and the second precursor are the same, both being 3.5 $\mu$m, the second sintering temperature is higher than the first sintering temperature by 50°C such that the average particle diameter of the first positive electrode material is lower than the average particle diameter of the second positive electrode material by 1.5 $\mu$m. In this point, the first sintering temperature may be 870°C, and the second sintering temperature may be 920°C. At this case, the molecular expressions of the first precursor and the second precursor are the same.

(2) The precursors are controlled by similar sintering temperatures.

In this embodiment, the first positive electrode material has the average particle diameter of 1.0-2.0 $\mu$m and the second positive electrode material has the average particle diameter of 2.5-6.0 $\mu$m by controlling the type and/or atomic index of the element in the precursors with equal average particle diameter.

The molecular expression of the first precursor is $[Ni_{r1}Co_{s1}M_{t1}Q'_{u1}]TM_1$, and the molecular expression of the second precursor is $[Ni_{r2}Co_{s2}M_{t2}Q''_{u2}]TM_2$.

Where, $0.60 \leq r1 < 10$, $0 < s1 < 0.30$, $0 < t1 < 0.30$, and $0 \leq u1 < 0.20$; $0.60 \leq r2 < 10$, $0 < s2 < 0.30$, $0 < t2 < 0.30$, $0 \leq u2 < 0.20$.

Q' and Q" are each independently selected from at least one of Zr, Mg, Ti, Te, Al, Ca, Sr, Sb, Nb, Pb, V, Ge, Se, W, Mo, Zn, Ce, and Y.

$TM_1$ and $TM_2$ are each independently selected from: $CO_3^{2-}$ and/or $OH^-$.

For example, under the condition where the second sintering temperature and the first sintering temperature are the same or the difference between them is not more than 30°C, the content of nickel in the first precursor and the second precursor may be regulated to be different and/or the type and/or content of doping element may be adjusted to be different, so that the average particle diameter of the first positive electrode material is 1.0-2.0 $\mu$m and the average particle diameter of the second positive electrode material is 2.5-6.0 $\mu$m. Specifically, this can be done by making the Ni content r1 in the first precursor lower than the Ni content r2 in the second precursor, and for every increase of approximately 0.1 (e.g., 0.05-0.12) in the difference between r2 and r1, the difference between the first sintering temperature and the second sintering temperature decreases by 50°C (at this point, the first sintering temperature is greater than the second sintering temperature). By such control, the first positive electrode material and second positive electrode material can be obtained using the first precursor and second precursor with different contents of nickel at similar sintering temperatures.

Alternatively, the doping element of the first precursor includes at least one of W, Mo, and Mg and excludes at least one of Ce, Zr, Sr, and Nb so as to increase the first sintering temperature. Simultaneously, the doping element of the second precursor includes at least one of Ce, Zr, Sr, and Nb and excludes at least one of W, Mo, and Mg so as to reduce the second sintering temperature. At the same time, the relative molar content of the dopant element in each precursor can also be adjusted accordingly. By such adjustment, the first positive electrode material and second positive electrode material can be obtained using the first precursor and second precursor with different contents of nickel at similar sintering temperatures.

To further improve the uniformity of the coating layer so that the thickness of the coating layer is nearly equal everywhere on the particulate matter of the monocrystalline positive electrode material, in some embodiments, the mixture is first sintered at a lower temperature for a short time to redistribute the residual alkali of the surfaces of particulate matters of the first positive electrode material and the second positive electrode material in a molten state, where the residual alkali in the molten state will present a more uniform coating on the surface of particulate matter. That is, the mixture is sintered at a temperature of 480-520°C for 2-3 hours to obtain an intermediate mixture. Then, a mixture of the intermediate mixture and a coating agent is subjected to coating-sintering to obtain the aforementioned monocrystalline positive electrode material.

It should be noted that subscripts in the molecular expression in the embodiments of the present application are atomic indices, which are used to indicate the relative molar content between corresponding atoms in the molecule. For example, r, s, t, and u in the precursor $[Ni_rCo_sM_tQ_u]TM$ are all atomic indices, in other words, r, s, t, and u respectively represent the relative molar contents of Ni element, Co element, M, and the doping element Q in the molecule. For instance, r represents the molar ratio of Ni element in the precursor.

The present invention also provides another method for preparing the aforementioned monocrystalline positive electrode material, which includes: separately performing coating-sintering on the first positive electrode material and the second positive electrode material, mixing the obtained coating-sintering products to obtain the monocrystalline positive electrode material; where the mass ratio of the first positive electrode material to the second positive electrode material is 2:3 to 3:2; the average particle diameter of the first positive electrode material is 1.0-2.0 $\mu$m, and the average particle diameter of the second positive electrode material is 2.5-6.0 $\mu$m; the difference between the residual alkali content of the surface of the second positive electrode material and the residual alkali content of the surface of the first positive electrode material is greater than 500 ppm; the molecular expression of the first positive electrode material and the second positive electrode material is $Li_{1+a}[Ni_xCo_yM_zQ_b]O_{2 \pm c}A_d$, where $0 \leq a < 0.20$, $0.60 \leq x < 1.0$, $0 < y < 0.30$, $0 < z < 0.30$, $0 \leq b < 0.20$, $c \leq 0.02$, $0 \leq d \leq 0.05$, and $x+y+z+b=1$; M is Mn and/or Al; Q is selected from at least one of Zr, Mg, Ti, Te, Ca, Sr, Sb, Nb, Pb, V, Ge, Se, W, Mo, Zn, Ce, and Y; and A is selected from at least one of F, Cl, and S.

This method is basically the same as the first preparation method for the monocrystalline positive electrode material provided by the present invention, with the difference being that the first preparation method for the monocrystalline positive electrode material provided by the present invention involves performing coating-sintering on a mixture containing the first positive electrode material and the second positive electrode material; while this method involves separately performing coating-sintering on the first positive electrode material and the second positive electrode material first and then mixing the obtained coating-sintering products, and can also obtain the monocrystalline positive electrode material provided by the present invention.

Further, the first positive electrode material and the second positive electrode material are obtained by the following methods: sintering the first mixture containing the first precursor and the first lithium source under the first condition to obtain the first positive electrode material, and sintering the second mixture containing the second precursor and the second lithium source under the second condition to obtain the second positive electrode material; where the molecular expression of the first precursor and the second precursor is $[Ni_rCo_sM_tQ_u]TM$, where $0.60 \leq r < 1.0$, $0 < s < 0.30$, $0 < t < 0.30$, $0 \leq u < 0.20$; M is Mn and/or Al; Q is selected from at least one of Zr, Mg, Ti, Te, Al, Ca, Sr, Sb, Nb, Pb, V, Ge, Se, W, Mo, Zn, Ce, and Y; and TM is selected from $CO_3^{2-}$ and/or $OH^-$; the first sintering temperature in the first condition and the second sintering temperature in the second condition are both selected from 750-980°C; the difference between the second lithium-content per mole of the second precursor in the second mixture and the first lithium-content per mole of the first precursor in the first mixture is 0.005-0.1.

The following provides a detailed description through examples and comparative examples.

(1) Preparation

Example 1

S1, a first precursor $Ni_{0.82}Co_{0.1}Mn_{0.08}$, a first lithium source lithium hydroxide, and a first dopant SrO are sintered at an elemental molar ratio of Sr:TM=0.02:1 at a first sintering temperature of 875°C for 15 hours to obtain a first positive electrode material $LiNi_{0.8}Co_{0.1}Mn_{0.08}Sr_{0.02}O_2$ with an average particle diameter of 1.51 $\mu$m.

Where, TM refers to Ni, Co, and Mn.

S2, a second precursor $Ni_{0.82}Co_{0.1}Mn_{0.08}$, a second lithium source lithium hydroxide, and a second dopant SrO are sintered at a molar ratio of Sr:TM=0.02:1 at a second sintering temperature of 925°C for 14 hours to obtain a second positive electrode material $LiNi_{0.8}Co_{0.1}Mn_{0.08}Sr_{0.02}O_2$ with an average particle diameter of 3.12 $\mu$m.

S3, the first positive electrode material and the second positive electrode material at a mass ratio of 1:1, and a coating agent $Co(OH)_2$ of 10,000 ppm are mixed to obtain a first mixture.

S4, the first mixture is subjected to coating-sintering at 670°C for 10 hours to obtain a monocrystalline positive electrode material. This monocrystalline positive electrode material has a morphology of particulate matter. The particulate matter has a coating layer of $LiCoO_2$, and an inner layer material of $LiNi_{0.8}Co_{0.1}Mn_{0.08}Sr_{0.02}O_2$.

Examples 2-5

Compared to Example 1, the main differences of Examples 2-5 lie in their respective sintering temperatures and the residual alkali content of the surfaces of the first positive electrode material and the second positive electrode material, referring to Table 1 for details.

Examples 6-10

Compared to Example 1, the main differences of Examples 6-10 lie in their respective sintering temperatures and different coating agents and residual alkali contents, referring to Table 1 for details.

Examples 11-12

Compared to Example 1, the main differences of Examples 11-12 lie in their respective sintering temperatures and changes of the first positive electrode material, and accordingly residual alkali contents of surface.

Example 13

Compared to Example 1, the mass ratio between the first positive electrode material and the second positive electrode material in Example 13 is 2:3, referring to Table 1 for details.

Example 14

Compared to Example 1, in Example 14, the first mixture is sintered at 500°C for 2 hours after step S3 and during step S4, referring to Table 1 for details.

Examples 15-16

Compared to Example 1, the main differences of Examples 15-2 lie in their respective sintering temperatures and the residual alkali content of the surfaces of the first and second positive electrode materials, referring to Table 1 for details.

Examples 17-19

Compared to Example 1, Examples 17-19 each have different sintering temperatures, coating schemes with different coating agents and coating amounts, and different residual alkali contents of the surfaces of the first positive electrode material and the second positive electrode material, referring to Table 1 for details.

Comparative Example 1

Compared to Example 1, the difference of Comparative Example 1 lies in coating the first positive electrode material and the second positive electrode material separately before mixing. That is, S1-S2 are the same as those in Example 1.

S3, the first positive electrode material is mixed with the coating agent of 10,000 ppm, and subjected to coating-sintering at 670°C for 10 hours to obtain the first monocrystalline positive electrode material.

S4, the second positive electrode material is mixed with the coating agent of 10,000 ppm, and subjected to coating-sintering at 670°C for 10 hours to obtain the second monocrystalline positive electrode material.

Both the first monocrystalline positive electrode material and the second monocrystalline positive electrode material are particulate matters with a coating layer containing $LiCoO_2$ and an inner layer material of $LiNi_{0.8}Co_{0.1}Mn_{0.08}Sr_{0.02}O_2$.

S5, the first monocrystalline positive electrode material and the second monocrystalline positive electrode material are mixed to obtain the monocrystalline positive electrode material.

Comparative Example 2

Compared to Example 1, the difference of Comparative Example 2 lies in lacking steps S3-S4.

The following summarizes the relevant parameters of the first sintering temperature $T_1$ and first sintering time $t_1$ of the first positive electrode material, the second sintering temperature $T_2$ and second sintering time $t_1$ of the second positive electrode material, as well as the coating-sintering temperature $T_3$ and coating time $t_3$, as shown in Tables 1-2. The coating-sintering temperature mainly depends on the coating agent. High-precision EDS is used to detect and summarize the molecular expression of the inner layer material, as shown in Table 3.

Table 1

| No. | First positive electrode material | | | Second positive electrode material | | |
|---|---|---|---|---|---|---|
| | Molecular expression | Li$_2$CO$_3$ (ppm) | LiOH (ppm) | Molecular expression | Li$_2$CO$_3$ (ppm) | LiOH (ppm) |
| Example 1 | $LiNi_{0.8}Co_{0.1}Mn_{0.08}Sr_{0.02}O_2$ | 753 | 5808 | $LiNi_{0.8}Co_{0.1}Mn_{0.08}Sr_{0.02}O_2$ | 1215 | 13019 |
| Example 2 | $LiNi_{0.8}Co_{0.1}Mn_{0.08}Sr_{0.02}O_2$ | 3500 | 16983 | $LiNi_{0.8}Co_{0.1}Mn_{0.08}Sr_{0.02}O_2$ | 753 | 5808 |
| Example 3 | $LiNi_{0.8}Co_{0.1}Mn_{0.08}Sr_{0.02}O_2$ | 526 | 5000 | $LiNi_{0.8}Co_{0.1}Mn_{0.08}Sr_{0.02}O_2$ | 3391 | 18000 |
| Example 4 | $LiNi_{0.8}Co_{0.1}Mn_{0.08}Sr_{0.02}O_2$ | 3391 | 18000 | $LiNi_{0.8}Co_{0.1}Mn_{0.08}Sr_{0.02}O_2$ | 500 | 6165 |
| Example 5 | $LiNi_{0.8}Co_{0.1}Mn_{0.08}Sr_{0.02}O_2$ | 500 | 6165 | $LiNi_{0.8}Co_{0.1}Mn_{0.08}Sr_{0.02}O_2$ | 800 | 16452 |
| Example 6 | $LiNi_{0.8}Co_{0.1}Mn_{0.08}Sr_{0.02}O_2$ | 800 | 16452 | $LiNi_{0.8}Co_{0.1}Mn_{0.08}Sr_{0.02}O_2$ | 1505 | 5532 |
| Example 7 | $LiNi_{0.8}Co_{0.1}Mn_{0.08}Sr_{0.02}O_2$ | 1505 | 5532 | $LiNi_{0.8}Co_{0.1}Mn_{0.08}Sr_{0.02}O_2$ | 1608 | 14419 |
| Example 8 | $LiNi_{0.8}Co_{0.1}Mn_{0.08}Sr_{0.02}O_2$ | 1608 | 14419 | $LiNi_{0.8}Co_{0.1}Mn_{0.08}Sr_{0.02}O_2$ | 894 | 7431 |
| Example 9 | $LiNi_{0.7}Co_{0.2}Mn_{0.08}Zr_{0.02}O_2$ | 894 | 7431 | $LiNi_{0.7}Co_{0.2}Mn_{0.08}Zr_{0.02}O_2$ | 2756 | 9104 |
| Example 10 | $LiNi_{0.96}Co_{0.1}Mn_{0.08}Y_{0.02}O_2$ | 2756 | 9104 | $LiNi_{0.96}Co_{0.1}Mn_{0.08}Y_{0.02}O_2$ | 532 | 10000 |
| Example 11 | $LiNi_{0.8}Co_{0.1}Mn_{0.08}Ce_{0.01}W_{0.01}O_2$ | 532 | 10000 | $LiNi_{0.8}Co_{0.1}Mn_{0.08}Ce_{0.02}W_{0.01}O_2$ | 879 | 12439 |
| Example 12 | $LiNi_{0.8}Co_{0.1}Mn_{0.08}Mg_{0.01}Zr_{0.01}O_2$ | 879 | 12439 | $LiNi_{0.8}Co_{0.1}Mn_{0.08}Mg_{0.01}Zr_{0.01}O_2$ | 1109 | 6134 |
| Example 13 | $LiNi_{0.8}Co_{0.1}Mn_{0.08}Sr_{0.02}O_2$ | 1109 | 6134 | $LiNi_{0.8}Co_{0.1}Mn_{0.08}Sr_{0.02}O_2$ | 1957 | 14067 |
| Example 14 | $LiNi_{0.8}Co_{0.1}Mn_{0.08}Sr_{0.02}O_2$ | 1957 | 14067 | $LiNi_{0.8}Co_{0.1}Mn_{0.08}Sr_{0.02}O_2$ | 3000 | 5596 |
| Example 15 | $LiNi_{0.8}Co_{0.1}Mn_{0.08}Sr_{0.02}O_2$ | 2395 | 9552 | $LiNi_{0.8}Co_{0.1}Mn_{0.08}Sr_{0.02}O_2$ | 1013 | 9962 |
| Example 16 | $LiNi_{0.8}Co_{0.1}Mn_{0.08}Sr_{0.02}O_2$ | 2935 | 22632 | $LiNi_{0.8}Co_{0.1}Mn_{0.08}Sr_{0.02}O_2$ | 2395 | 9552 |
| Example 17 | $LiNi_{0.8}Co_{0.1}Mn_{0.08}Sr_{0.02}O_2$ | 931 | 6239 | $LiNi_{0.8}Co_{0.1}Mn_{0.08}Sr_{0.02}O_2$ | 1496 | 12748 |
| Example 18 | $LiNi_{0.8}Co_{0.1}Mn_{0.08}Sr_{0.02}O_2$ | 931 | 6239 | $LiNi_{0.8}Co_{0.1}Mn_{0.08}Sr_{0.02}O_2$ | 1496 | 12748 |
| Example 19 | $LiNi_{0.8}Co_{0.1}Mn_{0.08}Sr_{0.02}O_2$ | 931 | 6239 | $LiNi_{0.8}Co_{0.1}Mn_{0.08}Sr_{0.02}O_2$ | 1496 | 12748 |
| Comparative Example 1 | $LiNi_{0.8}Co_{0.1}Mn_{0.08}Sr_{0.02}O_2$ | 691 | 4315 | $LiNi_{0.8}Co_{0.1}Mn_{0.08}Sr_{0.02}O_2$ | 2935 | 22632 |
| Comparative Example 2 | $LiNi_{0.8}Co_{0.1}Mn_{0.08}Sr_{0.02}O_2$ | 876 | 6934 | $LiNi_{0.8}Co_{0.1}Mn_{0.08}Sr_{0.02}O_2$ | 1434 | 12746 |

Table 2

| No. | First positive electrode material | | Second positive electrode material | | Coating agent | $T_3$(°C) | $t_3$ |
|---|---|---|---|---|---|---|---|
| | $T_1$(°C) | $t_1$(h) | $T_1$(°C) | $t_1$(h) | | | |
| Example 1 | 875 | 15 | 925 | 14 | $Co(OH)_2$ | 670 | 10 |
| Example 2 | 850 | 15 | 945 | 14 | $Co(OH)_2$ | 670 | 10 |
| Example 3 | 890 | 15 | 980 | 14 | $Co(OH)_2$ | 670 | 10 |
| Example 4 | 870 | 15 | 930 | 14 | $Co(OH)_2$ | 670 | 10 |
| Example 5 | 895 | 15 | 905 | 14 | $Co(OH)_2$ | 670 | 10 |
| Example 6 | 880 | 15 | 950 | 14 | $TiO_2$ | 700 | 10 |
| Example 7 | 870 | 15 | 925 | 14 | $LiFePO_4$ | 580 | 10 |
| Example 8 | 895 | 15 | 905 | 14 | $H_3BO_3$ | 320 | 10 |
| Example 9 | 860 | 15 | 940 | 14 | $Ni(OH)_2$ | 620 | 10 |
| Example 10 | 900 | 15 | 945 | 14 | $H_3BO_3$ | 320 | 10 |
| Example 11 | 860 | 15 | 935 | 14 | $Co(OH)_2$ | 670 | 10 |
| Example 12 | 880 | 15 | 938 | 14 | $Co(OH)_2$ | 670 | 10 |
| Example 13 | 875 | 15 | 925 | 14 | $Co(OH)_2$ | 670 | 10 |
| Example 14 | 875 | 15 | 925 | 14 | $Co(OH)_2$ | 670 | 10 |
| Example 15 | 855 | 15 | 925 | 14 | $Co(OH)_2$ | 670 | 10 |
| Example 16 | 860 | 15 | 935 | 14 | $Co(OH)_2$ | 670 | 10 |
| Example 17 | 872 | 15 | 928 | 14 | $Co(OH)_2/NH_4F$ | 650 | 10 |
| Example 18 | 872 | 15 | 928 | 14 | $Co(OH)_2/S/LiCl$ | 635 | 10 |
| Example 19 | 872 | 15 | 928 | 14 | $Co(OH)_2/S$ | 640 | 10 |
| Comparative Example 1 | 875 | 15 | 925 | 14 | $Co(OH)_2$ | 670 | 10 |
| Comparative Example 2 | 875 | 15 | 925 | 14 | / | / | / |

Table 3

| No. | Molecular expression of an inner layer material |
|---|---|
| Example 1 | $LiNi_{0.8}Co_{0.1}Mn_{0.08}Sr_{0.02}O_2$ |
| Example 2 | $LiNi_{0.8}Co_{0.1}Mn_{0.08}Sr_{0.02}O_2$ |
| Example 3 | $LiNi_{0.8}Co_{0.1}Mn_{0.08}Sr_{0.02}O_2$ |
| Example 4 | $LiNi_{0.8}Co_{0.1}Mn_{0.08}Sr_{0.02}O_2$ |
| Example 5 | $LiNi_{0.8}Co_{0.1}Mn_{0.08}Sr_{0.02}O_2$ |
| Example 6 | $LiNi_{0.8}Co_{0.1}Mn_{0.08}Sr_{0.02}O_2$ |
| Example 7 | $LiNi_{0.8}Co_{0.1}Mn_{0.08}Sr_{0.02}O_2$ |
| Example 8 | $LiNi_{0.8}Co_{0.1}Mn_{0.08}Sr_{0.02}O_2$ |
| Example 9 | $LiNi_{0.7}Co_{0.2}Mn_{0.08}Zr_{0.02}O_2$ |
| Example 10 | $LiNi_{0.96}Co_{0.1}Mn_{0.08}Y_{0.02}O_2$ |
| Example 11 | $LiNi_{0.8}Co_{0.1}Mn_{0.08}Ce_{0.01}W_{0.01}O_2$ |
| Example 12 | $LiNi_{0.8}Co_{0.1}Mn_{0.08}Mg_{0.01}Zr_{0.01}O_2$ |
| Example 13 | $LiNi_{0.8}Co_{0.1}Mn_{0.08}Sr_{0.02}O_2$ |
| Example 14 | $LiNi_{0.8}Co_{0.1}Mn_{0.08}Sr_{0.02}O_2$ |

(continued)

| No. | Molecular expression of an inner layer material |
|---|---|
| Example 15 | $LiNi_{0.8}Co_{0.1}Mn_{0.08}Sr_{0.02}O_2$ |
| Example 16 | $LiNi_{0.8}Co_{0.1}Mn_{0.08}Sr_{0.02}O_2$ |
| Example 17 | $LiNi_{0.799}Co_{0.1}Mn_{0.08}Sr_{0.02}O_2F_{0.001}$ |
| Example 18 | $LiNi_{0.798}Co_{0.1}Mn_{0.08}Sr_{0.02}O_2S_{0.001}Cl_{0.001}$ |
| Example 19 | $LiNi_{0.799}Co_{0.1}Mn_{0.08}Sr_{0.02}O_2S_{0.001}$ |
| Comparative Example 1 | $LiNi_{0.8}Co_{0.1}Mn_{0.08}Sr_{0.02}O_2$ |
| Comparative Example 2 | $LiNi_{0.8}Co_{0.1}Mn_{0.08}Sr_{0.02}O_2$ |

(2) Testing

In the examples and comparative examples, the following tests are performed: the residual alkali content of the first positive electrode material and the second positive electrode material obtained in steps S1 and S2, and the $D_{25}$, $D_{75}$ and the compact density of the monocrystalline positive electrode material obtained in step S4. The following provides a detailed description.

1. Test of residual alkali: a sample of 30 g (accuracy 0.0001 g) is weighed and added into a 100 mL beaker, then 50 mL of deionized water is added, and the breaker is sealed with a plastic wrap after adding magnetic beads into the beaker. The breaker is placed on a magnetic stirrer for stirring around 25 minutes before removing it. After letting the breaker stand still for 5 minutes, a glass funnel is used for filtration and the filtered clean solution is a solution to be tested. The corresponding testing data are shown in Table 3.
Specifically, 0.1 M HCl is added to the solution to be tested at a rate of 0.5 mL/min so that a curve of reference voltage is obtained by titrating an appropriate mixture of LiOH and $Li_2CO_3$ which are dissolved in deionized water at a low concentration. In almost all cases, there are two distinct plateaus observed. The upper plateau with an endpoint V1 (in ml) between pH 8 and pH 9 corresponds to the balance of $OH^-/H_2O$, followed by the balance of $CO_3^{2-}/HCO^{3-}$. The lower plateau with an endpoint V2 (in ml) between pH 4 and pH 6 corresponds to the balance of $HCO^{3-}/H_2CO^3$. The inflection point V1 between the first and second plateaus and the inflection point V2 after the second plateau are obtained from the corresponding minimum value of the derivative dpH/dVol of the pH curve. The second inflection point may be generally obtained at a position near pH 4.7. The results are then represented by weight percentages of LiOH and $Li_2CO_3$ as shown in following Equations (a) and (b):

$$Li_2CO_3wt\%=73.89/1000*(V2-V1) \qquad \text{Equation (a)}$$

$$LiOHwt\%=23.95/1000*(2V1-V2) \qquad \text{Equation (b)}$$

2. Test of particle size: the monocrystalline positive electrode material is tested by the particle size analyzer to get $D_{25}$ and $D_{75}$, and the first and second particles are sieved based on the $D_{25}$ and $D_{75}$. The corresponding test data are shown in Table 3.
3. Compaction density: the corresponding compaction density is obtained by keeping a pressure of 3T for 30 seconds. The corresponding test data are shown in Table 4.

Table 4

| No. | Taget particle size for sieving a first particle | Taget particle size for sieving a second particle | Value of the taget particle size of the first particle | Value of the taget particle size of the second particle | Compact density(g/cm$^3$) |
|---|---|---|---|---|---|
| Example 1 | $D_{25}$ | $D_{75}$ | 2.98 | 6.17 | 3.31 |
| Example 2 | $D_{25}$ | $D_{75}$ | 2.03 | 7.64 | 3.32 |

(continued)

| No. | Taget particle size for sieving a first particle | Taget particle size for sieving a second particle | Value of the taget particle size of the first particle | Value of the taget particle size of the second particle | Compact density(g/cm$^3$) |
|---|---|---|---|---|---|
| Example 3 | $D_{25}$ | $D_{75}$ | 4.02 | 10.78 | 3.35 |
| Example 4 | $D_{25}$ | $D_{75}$ | 3.01 | 7.09 | 3.30 |
| Example 5 | $D_{25}$ | $D_{75}$ | 3.73 | 5.44 | 3.24 |
| Example 6 | $D_{25}$ | $D_{75}$ | 3.74 | 8.15 | 3.32 |
| Example 7 | $D_{25}$ | $D_{75}$ | 2.77 | 6.56 | 3.31 |
| Example 8 | $D_{25}$ | $D_{75}$ | 2.64 | 7.66 | 3.33 |
| Example 9 | $D_{25}$ | $D_{75}$ | 2.09 | 5.59 | 3.25 |
| Example 10 | $D_{25}$ | $D_{75}$ | 3.22 | 6.25 | 3.31 |
| Example 11 | $D_{25}$ | $D_{75}$ | 3.01 | 7.53 | 3.32 |
| Example 12 | $D_{25}$ | $D_{75}$ | 3.34 | 7.22 | 3.33 |
| Example 13 | $D_{20}$ | $D_{80}$ | 2.76 | 6.08 | 3.29 |
| Example 14 | $D_{25}$ | $D_{75}$ | 3.39 | 6.45 | 3.31 |
| Example 15 | $D_{25}$ | $D_{75}$ | 2.68 | 6.27 | 3.31 |
| Example 16 | $D_{25}$ | $D_{75}$ | 2.87 | 6.71 | 3.30 |
| Example 17 | $D_{25}$ | $D_{75}$ | 2.93 | 6.09 | 3.31 |
| Example 18 | $D_{25}$ | $D_{75}$ | 2.95 | 6.1 | 3.32 |
| Example 19 | $D_{25}$ | $D_{75}$ | 2.92 | 6.08 | 3.31 |
| Comparative Example 1 | $D_{25}$ | $D_{75}$ | 2.95 | 6.74 | 3.21 |
| Comparative Example 2 | $D_{25}$ | $D_{75}$ | 6.09 | 3.02 | 3.22 |

Further, a sieve for sieving the first and second particles is determined based on the target particle size value of the first particle and the target particle size value of the second particle in Table 4; and according to the following embodiments, a sieving is performed to obtain the first and second particles of each example and comparative example.

Example 1: the monocrystalline positive electrode particles are first screened by a 4500-mesh sieve (a particle diameter of about $2.8 \pm 0.5$ μm) to collect an undersize portion. The aforementioned undersize portion is sieved by a 5500-mesh sieve (a particle diameter of about $2.3 \pm 0.5$ μm), and the obtained oversize portion is the first particle.

Next, the monocrystalline positive electrode particles are screened by an 1800-mesh sieve (a particle diameter of about $7.2 \pm 0.5$ μm) to collect an undersize portion. The aforementioned undersize portion is sieved by a 2200-mesh sieve (a particle diameter of about $5.9 \pm 0.5$ μm), and the obtained oversize portion is the second particle.

Example 2: the monocrystalline positive electrode particles are first screened by a 4500-mesh sieve (a particle diameter of about $2.8 \pm 0.5$ μm) to collect the undersize portion. The aforementioned undersize portion is sieved by a 5500-mesh sieve (a particle diameter of about $2.3 \pm 0.5$ μm), and the obtained oversize portion is the first particle.

Next, the monocrystalline positive electrode particles are screened by a 1500-mesh sieve (a particle diameter of about $8.7 \pm 0.5$ μm) to collect an undersize portion. The aforementioned undersize portion is sieved by an 1800-mesh sieve (a particle diameter of about $7.2 \pm 0.5$ μm), and the obtained oversize portion is the second particle.

Example 3: the monocrystalline positive electrode particles are first screened by a 3500-mesh sieve (a particle diameter of about $3.8 \pm 0.5$ μm) to collect the undersize portion. The aforementioned undersize portion is sieved by a 3900-mesh sieve (a particle diameter of about $3.3 \pm 0.5$ μm), and the obtained oversize portion is the first particle.

Next, the monocrystalline positive electrode particles are screened by an 1100-mesh sieve (a particle diameter of about $11.8 \pm 0.5$ μm) to collect an undersize portion. The aforementioned undersize portion is sieved by a 1400-mesh sieve (a particle diameter of about $9.3 \pm 0.5$ μm), and the obtained oversize portion is the second particle.

Example 4: the selected sieves are the same as those in Example 1.

Example 5: the monocrystalline positive electrode particles are first screened by a 3400-mesh sieve (a particle diameter of about 3.8±0.5 μm) to collect the undersize portion. The aforementioned undersize portion is sieved by a 3900-mesh sieve (a particle diameter of about 3.3±0.5 μm), and the obtained oversize portion is the first particle.

Next, the monocrystalline positive electrode particles are screened by an 1800-mesh sieve (a particle diameter of about 7.2±0.5 μm) to collect an undersize portion. The aforementioned undersize portion is sieved by a 2200-mesh sieve (a particle diameter of about 5.9±0.5 μm), and the obtained oversize portion is the second particle.

Example 6: the monocrystalline positive electrode particles are first screened by a 3400-mesh sieve (a particle diameter of about 3.8±0.5 μm) to collect the undersize portion. The aforementioned undersize portion is sieved by a 3900-mesh sieve (a particle diameter of about 3.3±0.5 μm), and the obtained oversize portion is the first particle.

Next, the monocrystalline positive electrode particles are screened by a 1500-mesh sieve (a particle diameter of about 8.7±0.5 μm) to collect an undersize portion. The aforementioned undersize portion is sieved by an 1800-mesh sieve (a particle diameter of about 7.2±0.5 μm), and the obtained oversize portion is the second particle.

Example 7: the selected sieves are the same as those in Example 1.

Example 8: the monocrystalline positive electrode particles are first screened by a 4500-mesh sieve (a particle diameter of about 2.8±0.5 μm) to collect the undersize portion. The aforementioned undersize portion is sieved by a 5500-mesh sieve (a particle diameter of about 2.3±0.5 μm), and the obtained oversize portion is the first particle.

Next, the monocrystalline positive electrode particles are screened by a 1500-mesh sieve (a particle diameter of about 8.7±0.5 μm) to collect an undersize portion. The aforementioned undersize portion is sieved by an 1800-mesh sieve (a particle diameter of about 7.2±0.5 μm), and the obtained oversize portion is the second particle.

Example 9: the selected sieves are the same as those in Example 1.

Example 10: the monocrystalline positive electrode particles are first screened by a 3400-mesh sieve (a particle diameter of about 3.8±0.5 μm) to collect the undersize portion. The aforementioned undersize portion is sieved by a 3900-mesh sieve (a particle diameter of about 3.3±0.5 μm), and the obtained oversize portion is the first particle.

Next, the monocrystalline positive electrode particles are screened by an 1800-mesh sieve (a particle diameter of about 7.2±0.5 μm) to collect an undersize portion. The aforementioned undersize portion is sieved by a 2200-mesh sieve (a particle diameter of about 5.9±0.5 μm), and the obtained oversize portion is the second particle.

Examples 11-13: the selected sieves are the same as those in Example 1.

Example 14: the monocrystalline positive electrode particles are first screened by a 3400-mesh sieve (a particle diameter of about 3.8±0.5 μm) to collect the undersize portion. The aforementioned undersize portion is sieved by a 3900-mesh sieve (a particle diameter of about 3.3±0.5 μm), and the obtained oversize portion is the first particle.

Next, the monocrystalline positive electrode particles are screened by an 1800-mesh sieve (a particle diameter of about 7.2±0.5 μm) to collect an undersize portion. The aforementioned undersize portion is sieved by a 2200-mesh sieve (a particle diameter of about 5.9±0.5 μm), and the obtained oversize portion is the second particle.

Examples 15-16 and Comparative Example 1: the selected sieves are the same as those in Example 1.

Further, the first and second particles sieved are measured for the average particle diameter, average thickness of coating layer, and specific surface area separately, and the data obtained are shown in Table 5.

1) Specific surface area, BET: about 5 g sample is taken and placed in a long tube with a bubble, and subjected to vacuum treatment at 200°C for 2 h; and then $N_2$ is introduced for gas adsorption. The amount of adsorbate molecule ($N_2$) adsorbed by the sample being tested is determined based on changes in pressure or weight before and after adsorption, and obtaining the specific surface area $B_1$ of the first particles and the specific surface area $B_2$ of the second particles.

2) Average particle diameter: the sampling size for each of the first and second particles is 3. Each sample is subjected to the following tests: taking SEM images at a magnification of 2000 with 3 imaging regions for capturing, that is, each sample corresponds to three SEM images, where 100 particles are randomly selected from each SEM image to measure the particle diameter of each particulate matter. The average particle diameter of particulate matter of each sample is calculated, and then the average particle diameter of particulate matter of three samples is calculated to obtain the average particle diameter of the first particles and the average particle diameter of the second particles.

3) Average thickness of coating layer: the sample is dispersed after weighing, and subjected to TEM imaging. 50 particles are randomly captured and the thicknesses of coating layers of them are measured, followed by calculating the average value thereof to obtain the average thickness $T_1$ of coating layer of the first particle and the average thickness $T_2$ of coating layer of the second particle.

Based on the respective tested data for the first and second particles, the value of the relationship formula

$$0.5 \leq m\frac{T_1 \times B_1}{F_1^2} + (1-m)\frac{T_2 \times B_2}{F_2^2} \leq 0.6$$ is calculated.

Table 5

| No. | First particle | | | Second particle | | | Relationship formula | |
|---|---|---|---|---|---|---|---|---|
| | Average particle diameter $F_1(\mu m)$ | Average thickness of coating layer $T_1$ (nm) | Specific surface area $B_1$ ($m^2$/g) | Average particle diameter $F_2(\mu m)$ | Average thickness of coating layer $T_2$ (nm) | Specific surface area $B_2$ ($m^2$/g) | m | Value of relationship formula |
| Example 1 | 1.51 | 9.3 | 0.9346 | 3.12 | 38.6 | 0.4035 | 0.5 | 2.7 |
| Example 2 | 1 | 5 | 1.0348 | 4 | 80 | 0.2962 | 0.5 | 3.3 |
| Example 3 | 2 | 10 | 0.8734 | 6 | 100 | 0.2446 | 0.5 | 1.4 |
| Example 4 | 1.43 | 11.3 | 0.9533 | 3.71 | 50 | 0.3781 | 0.5 | 3.3 |
| Example 5 | 1.92 | 15.6 | 0.8859 | 2.5 | 48.1 | 0.7135 | 0.5 | 4.6 |
| Example 6 | 1.76 | 17.9 | 0.8955 | 4.23 | 28.4 | 0.2865 | 0.5 | 2.8 |
| Example 7 | 1.41 | 12.3 | 0.9621 | 3.11 | 35.2 | 0.4097 | 0.5 | 3.7 |
| Example 8 | 1.28 | 14.9 | 0.9812 | 3.94 | 43.5 | 0.3284 | 0.5 | 4.9 |
| Example 9 | 1.09 | 6.3 | 1.0129 | 2.63 | 12.2 | 0.7345 | 0.5 | 3.3 |
| Example 10 | 1.49 | 13.7 | 0.9405 | 3.22 | 59.4 | 0.3914 | 0.5 | 4.0 |
| Example 11 | 1.58 | 9.2 | 0.9071 | 3.64 | 27.1 | 0.3807 | 0.5 | 2.1 |
| Example 12 | 1.62 | 12.6 | 0.8991 | 3.73 | 33.9 | 0.3764 | 0.5 | 2.6 |
| Example 13 | 1.48 | 12.5 | 0.9468 | 3.09 | 41.6 | 0.4182 | 0.4 | 3.3 |
| Example 14 | 1.53 | 9.8 | 0.9517 | 3.13 | 38.4 | 0.4012 | 0.5 | 2.8 |
| Example 15 | 1.27 | 27.1 | 0.4014 | 3.15 | 28.4 | 1.0011 | 0.5 | 9.4 |
| Example 16 | 1.37 | 4.6 | 0.9885 | 3.41 | 120 | 0.3842 | 0.5 | 3.2 |
| Example 17 | 1.53 | 9.5 | 0.9468 | 3.17 | 39.9 | 0.4195 | 0.5 | 2.8 |
| Example 18 | 1.53 | 9.7 | 0.9544 | 3.17 | 40.7 | 0.4292 | 0.5 | 2.8 |
| Example 19 | 1.53 | 9.6 | 0.9511 | 3.17 | 40.3 | 0.4207 | 0.5 | 2.8 |
| Comparative Example 1 | 1.5 | 10.2 | 0.9406 | 3.23 | 40.3 | 0.3901 | 0.5 | 2.9 |
| Comparative Example 2 | 1.52 | 0 | 0.9248 | 3.01 | 0 | 0.4195 | 0.5 | 0 |

To make the thicknesses of coating layer of surfaces of the first positive electrode material and the second positive electrode material different, the lithium-content can be adjusted so that the difference between the residual alkali contents of surfaces of the first positive electrode material and the second positive electrode material corresponds to the difference between the average thicknesses of coating layers. Combined with Tables 1-2 and 4-5, it can be concluded that different residual alkali contents can be controlled by varying the lithium content under the same positive electrode material and sintering temperature, thereby achieving control of different average thicknesses of the coating layers of the first and second particles.

(3) Preparation and test of lithium-ion batteries

To test the electrochemical performance of the positive electrode material in the examples and comparative examples, the positive electrode material is installed in a lithium-ion button cell to measure its capacity. The positive electrode material is installed in a full cell to test cycling performance of the positive electrode material.

Specifically, at 25°C and a normal pressure (0.1 MPa), a positive electrode sheet, a lithium sheet, a separator, and electrolyte are assembled in a glove box to obtain a button cell. The surface of one side of the positive electrode sheet loaded with the positive electrode material has an area of 1.54 $cm^2$ and an areal loading amount of 15 mg/$cm^2$.

Test parameters: the button cell is charged at a constant current rate of 0.2C until the voltage reaches a cutoff voltage (4.25 V for 8-Series or higher Series, 4.3 V for 7-Series), and then charged at a constant voltage under the cutoff voltage condition until the current is less than 0.05C. The charge capacity at this point is recorded as a first-cycle charge capacity. After resting for 5 minutes, the button cell is discharged at a constant current rate of 0.2C until the voltage reaches 2.5V. The discharge capacity at this point is recorded as a first-cycle specific discharge capacity, which is also the initial capacity.

Further, an electrode sheet coated with the positive electrode material, the negative electrode using graphite, a separator of polyethylene and an electrolyte (the electrolyte being $LiPF_6$ and the solvent being EC/DMC) are assembled into a full cell. The surface loaded with the positive electrode material on a side of the positive electrode sheet has an area of , and the areal loading amount of 15 mg/cm$^2$.

Test parameters: under a charge and discharge condition of 1C, the full-cell is subjected to charging and discharging cycles; a ratio of the capacity of each cycle to first cycle capacity is determined as a capacity retention rate; and under the condition of 45°C, its capacity retention rate is calculated after 300 cycles.

The above test data are shown in Table 6.

Table 6

| No. | Capacity (mAh/g) | Capacity retention rate (%) |
| --- | --- | --- |
| Example 1 | 201.6 | 93.2 |
| Example 2 | 198.3 | 92.3 |
| Example 3 | 195.3 | 91.1 |
| Example 4 | 198.4 | 92.2 |
| Example 5 | 193.7 | 90.1 |
| Example 6 | 200.8 | 92.8 |
| Example 7 | 195.2 | 91.5 |
| Example 8 | 191.4 | 89.7 |
| Example 9 | 193.1 | 93.2 |
| Example 10 | 204.3 | 90.6 |
| Example 11 | 199.5 | 92.4 |
| Example 12 | 200.4 | 92.7 |
| Example 13 | 198.1 | 92.3 |
| Example 14 | 203.2 | 93.5 |
| Example 15 | 183.4 | 81.4 |
| Example 16 | 179.6 | 80.1 |
| Example 17 | 200.7 | 92.5 |
| Example 18 | 199.8 | 92.3 |
| Example 19 | 200.1 | 92.7 |
| Comparative Example 1 | 196.4 | 91.3 |
| Comparative Example 2 | 197.3 | 79.3 |

As can be seen from Table 6, the cycling performance of the monocrystalline positive electrode material in the examples is significantly improved. Referring to Table 1, the difference between the residual alkali content of the surface of the first positive electrode material and the residual alkali content of the surface of the second positive electrode material in Example 3 is similar to the difference between the residual alkali content of the surface of the first positive electrode material and the residual alkali content of the surface of the second positive electrode material in each of Example 5 and Comparative Example 1. By combination with Table 5, it can be seen that the capacity retention rates of Examples 3 and 5 are higher than that of Comparative Example 1. It can be concluded that, compared to the method in Comparative Example 1 where the monocrystalline positive electrode material is obtained by mixing after separately coating, the method provided in the examples of the present application can avoid the problem of uneven coating caused by the coating of monocrystalline particles with similar sizes in an agglomerated state, especially when the monocrystalline particles are prone to agglomeration. As a result, the capacity retention rates of Example 3 and Example 5 are higher than that of Comparative Example 1.

It is evident that those skilled in the art may make various modifications and variations to the present application without departing from the spirit and scope thereof. Thus, if such modifications and variations fall within the scope of the claims of the present application and their equivalents, the present application is also intended to include such modifications and variations.

**Claims**

1. A monocrystalline positive electrode material, wherein the monocrystalline positive electrode material is a particulate matter, and the particulate matter comprises an inner layer material and a coating layer of the inner layer material; and wherein

   the particulate matter comprises first particles having an average particle diameter $F_1$ of 1.0-2.0 $\mu$m and second particles having an average particle diameter $F_2$ of 2.5-6.0 $\mu$m, and an average thickness $T_1$ of the coating layer of the first particles is less than an average thickness $T_2$ of the coating layer of the second particles;
   the coating layer comprises a fast ion conductor, and a molecular expression of the inner layer material is: $Li_{1+a}[Ni_xCo_yM_zQ_b]O_{2\pm c}A_d$, wherein $0\leq a<0.20$, $0.60\leq x<1.0$, $0<y<0.30$, $0<z<0.30$, $0\leq b<0.20$, $c\leq0.02$, $0\leq d\leq0.05$, and $x+y+z+b=1$; M is Mn and/or Al; Q is selected from at least one of Zr, Mg, Ti, Te, Ca, Sr, Sb, Nb, Pb, V, Ge, Se, W, Mo, Zn, Ce and Y; and A is selected from at least one of F, Cl, and S.

2. The monocrystalline positive electrode material according to claim 1, wherein the monocrystalline positive electrode material is obtained by co-sintering a mixture containing a first inner layer material and a second inner layer material; and wherein a residual alkali content of a particle surface of the first inner layer material is lower than a residual alkali content of a particle surface of the second inner layer material.

3. The monocrystalline positive electrode material according to claim 1, wherein $F_2-F_1\geq0.6$ $\mu$m.

4. The monocrystalline positive electrode material according to claim 1, wherein a thickness of the coating layer is 5-100 nm.

5. The monocrystalline positive electrode material according to any one of claims 1-4, wherein $T_1\geq5$ nm, and $T_2-T_1\geq10$ nm.

6. The monocrystalline positive electrode material according to claim 5, wherein $T_1<20$ nm, and $10$ nm$\leq T_2<100$ nm.

7. The monocrystalline positive electrode material according to claim 5, wherein $8$ nm$\leq T_1<15$ nm and $20$ nm$\leq T_2<50$ nm.

8. The monocrystalline positive electrode material according to claim 1, wherein $0.5 \leq \mathrm{m}\frac{T_1\times B_1}{D_{25}^2} + (1-m)\frac{T_2\times B_2}{D_{75}^2} \leq 6$;

   and wherein m is a preset coefficient, $0.4\leq m\leq0.6$, and $B_1$ and $B_2$ are a specific surface area of the first particles and a specific surface area of the second particles, respectively.

9. A method for preparing the monocrystalline positive electrode material according to any one of claims 1-8, comprising:

   performing coating-sintering on a mixture containing a first positive electrode material and a second positive electrode material to obtain the monocrystalline positive electrode material; wherein
   a mass ratio between the first positive electrode material and the second positive electrode material is 2:3 to 3:2;
   an average particle diameter of the first positive electrode material is 1.0-2.0 $\mu$m, and an average particle diameter of the second positive electrode material is 2.5-6.0 $\mu$m; a difference between a residual alkali content of a surface of the second positive electrode material and a residual alkali content of a surface of the first positive electrode material is greater than 500 ppm;
   a molecular expression of the first positive electrode material and the second positive electrode material is $Li_{1+a}[Ni_xCo_yM_zQ_b]O_{2\pm c}A_d$, wherein $0\leq a<0.20$, $0.60\leq x<1.0$, $0<y<0.30$, $0<z<0.30$, $0\leq b<0.20$, $c\leq0.02$, $0\leq d\leq0.05$, and $x+y+z+b=1$; M is Mn and/or Al; Q is selected from at least one of Zr, Mg, Ti, Te, Ca, Sr, Sb, Nb, Pb, V, Ge, Se, W, Mo, Zn, Ce, and Y; and A is selected from at least one of F, Cl, and S.

10. The method according to claim 9, wherein the first positive electrode material and the second positive electrode material are obtained by the following method:

sintering a first mixture containing a first precursor and a first lithium source under a first condition to obtain the first positive electrode material, and sintering a second mixture containing a second precursor and a second lithium source under a second condition to obtain the second positive electrode material; wherein a molecular expression of the first precursor and the second precursor is $[Ni_rCo_sM_tQ_u]TM$; wherein $0.60 \leq r < 1.0$, $0 < s < 0.30$, $0 < t < 0.30$, $0 \leq u < 0.20$, M is Mn and/or Al, Q is selected from: Zr, Mg, Ti, Te, Al, Ca, Sr, Sb, Nb, Pb, V, Ge, Se, W, Mo, Zn, Ce, and Y, and TM is selected from: $CO_3^{2-}$ and/or $OH^-$; a first sintering temperature of the first condition and a second sintering temperature of the second condition are both selected from 750-980°C; a difference between a second lithium-content per mole of the second precursor in the second mixture and a first lithium-content per mole of the first precursor in the first mixture is 0.005-0.1.

11. The method according to claim 9 or 10, wherein the performing coating-sintering on the mixture containing the first positive electrode material and the second positive electrode material to obtain the monocrystalline positive electrode material comprises:

sintering the mixture at a temperature of 480-520°C for 2-3 hours to obtain an intermediate mixture; performing the coating-sintering on a mixture of the intermediate mixture and a coating agent to obtain the monocrystalline positive electrode material.

12. A method for preparing the monocrystalline positive electrode material according to any one of claims 1-8, comprising:

performing coating-sintering on the first positive electrode material and the second positive electrode material separately, mixing the resulting coating-sintering products to obtain the monocrystalline positive electrode material; wherein a mass ratio between the first positive electrode material and the second positive electrode material is 2:3 to 3:2; an average particle diameter of the first positive electrode material is 1.0-2.0 $\mu$m, and an average particle diameter of the second positive electrode material is 2.5-6.0 $\mu$m; a difference between a residual alkali content of a surface of the second positive electrode material and a residual alkali content of a surface of the first positive electrode material is greater than 500 ppm; a molecular expression of the first positive electrode material and the second positive electrode material is $Li_{1+a}[Ni_xCo_yM_zQ_b]O_{2\pm c}A_d$, wherein $0 \leq a < 0.20$, $0.60 \leq x < 1.0$, $0 < y < 0.30$, $0 < z < 0.30$, $0 \leq b < 0.20$, $c \leq 0.02$, $0 \leq d \leq 0.05$, and $x+y+z+b=1$; M is Mn and/or Al; Q is selected from at least one of Zr, Mg, Ti, Te, Ca, Sr, Sb, Nb, Pb, V, Ge, Se, W, Mo, Zn, Ce, and Y; and A is selected from at least one of F, Cl, and S.

13. A lithium-ion battery, comprising: the monocrystalline positive electrode material according to any one of claims 1-8.

FIG. 1

EP 4 718 529 A1

# INTERNATIONAL SEARCH REPORT

| International application No. |
|---|
| **PCT/CN2024/127515** |

### A. CLASSIFICATION OF SUBJECT MATTER

H01M4/36(2006.01)i; H01M4/525(2010.01)i; H01M10/0525(2010.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS: CNTXT; DWPI; VEN; ENTXT; CNKI: 电池, 正极材料, 第一颗粒, 第二颗粒, 粒径, 单晶, 包覆层, 厚度, battery, positive material, first particle, second particle, grain size, single crystal, coating, thickness

### C. DOCUMENTS CONSIDERED TO BE RELEVANT

| Category* | Citation of document, with indication, where appropriate, of the relevant passages | Relevant to claim No. |
|---|---|---|
| PX | CN 117199325 A (NINGBO RONBAY NEW ENERGY TECHNOLOGY CO., LTD.) 08 December 2023 (2023-12-08) description, paragraphs 5-117 | 1-13 |
| A | CN 115241449 A (ZHEJIANG BAMO TECHNOLOGY CO., LTD. et al.) 25 October 2022 (2022-10-25) description, paragraphs 6-18 | 1-13 |
| A | CN 103066282 A (DONGGUAN AMPEREX TECHNOLOGY LTD.) 24 April 2013 (2013-04-24) description, paragraphs 9-27 | 1-13 |
| A | JP 2020035605 A (SUMITOMO METAL MINING CO., LTD.) 05 March 2020 (2020-03-05) entire document | 1-13 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 January 2025** | **24 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/127515**

| Patent document cited in search report | | | Publication date (day/month/year) | Patent family member(s) | | | Publication date (day/month/year) |
|---|---|---|---|---|---|---|---|
| CN | 117199325 | A | 08 December 2023 | None | | | |
| CN | 115241449 | A | 25 October 2022 | None | | | |
| CN | 103066282 | A | 24 April 2013 | CN | 103066282 | B | 28 December 2016 |
| JP | 2020035605 | A | 05 March 2020 | JP | 7159697 | B2 | 25 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311408941